# EUROPÄISCHE PATENTSCHRIFT

(11) **EP 3 704 460 B1**
(45) Veröffentlichungstag und Bekanntmachung des Hinweises auf die Patenterteilung: **01.03.2023**
(21) Anmeldenummer: 18796929.0
(22) Anmeldetag: 02.11.2018
(51) Int. Cl.: G01N 3/04, G01N 3/08, G01M 5/00

(54) **VORRICHTUNG ZUR STRUKTURPRÜFUNG**
DEVICE FOR STRUCTURE TESTING
DISPOSITIF DE TEST DE STRUCTURE

(30) Priorität: 03.11.2017 DE 102017219592
(43) Veröffentlichungstag der Anmeldung: 09.09.2020
(73) Patentinhaber: Fraunhofer-Gesellschaft zur Förderung der angewandten Forschung e.V., 80686 München (DE)
(72) Erfinder: ROSEMEIER, Malo, 28211 Bremen (DE); ANTONIOU, Alexandros, 27578 Bremerhaven (DE)
(74) Vertreter: Pfenning, Meinig & Partner mbB
(86) Internationale Anmeldenummer: PCT/EP2018/080062
(87) Internationale Veröffentlichungsnummer: WO 2019/086636

(56) Entgegenhaltungen:
- CH-A2- 702 812
- CN-A- 107 271 283
- DE-A1-102008 048 131
- GB-A- 2 548 589

## Beschreibung

Die Erfindung betrifft einen Prüfstand zur Strukturprüfung, insbesondere zur Strukturprüfung von Subkomponenten von Windenergieanlagen, wie Komponenten von Windenergieanlagenrotorblättern.

Die Rotorblätter von Windenergieanlagen sind im Betrieb starken Belastungen sowie Verschleiß ausgesetzt. Die Leistungsoptimierung bei größtmöglicher Sicherheit stellt beim Bau von Windenergieanlagen und insbesondere beim Entwickeln der Rotorblätter eine große Herausforderung dar. Hierfür sollten die elastischen Eigenschaften, wie Elastizitätsmodul, Streckgrenze, Festigkeit, Bruchdehnung, also die Belastbarkeit sowie die plastische und elastische Verformbarkeit, und weitere Strukturkennwerte des Rotorblatts bekannt sein. Hierfür werden Prüfkörper, also beispielsweise die Komponenten der Windenergieanlagenrotorblätter, in einen Prüfstand eingespannt und auf Zug oder Druck belastet. So können beispielsweise Kennlinien aufgezeichnet werden, und es kann festgestellt werden, bei welchen Kräften oder Dehnungen es zum Bruch oder zum Versagen des Prüfkörpers kommt. Aufgrund der Länge der Rotorblätter, die häufig über 30 m beträgt, ist das Prüfen der Blätter mit gro-ßem technischem, zeitlichem und finanziellem Aufwand verbunden. Erschwerend kommt der komplizierte Aufbau der Rotorblätter hinzu. Die Rotorblätter sind häufig hybridartig, aus mehreren Materialien, aufgebaut und/oder anisotrop, haben also beispielsweise in verschiedene Raumrichtungen unterschiedliche elastische Eigenschaften, weisen Hohlräume, Aussparungen und/oder Versteifungen auf. Für derartige Prüfkörper kann nicht auf Materialtests auf Couponebene zurückgegriffen werden, da die Kennwerte stark von der Struktur abhängig sind und nicht einfach aus den Materialkennwerten errechnet werden können. Um im Prüfverfahren realistische Belastungsbedingungen zu realisieren, spielen die Richtung und der Angriffspunkt der eingeleiteten Kräfte eine große Rolle. Solche realistischen Bedingungen können insbesondere in Subkomponententests erzeugt werden. Die Subkomponententests sind dabei besser durchführbar und kontrollierbar als Ganzblatttests, da die Abmessungen der Prüfkörper kleiner sind. Computersimulationen können unterstützend herangezogen werden, können aber Belastungstests in Prüfständen nicht ersetzen.

Nach dem Stand der Technik werden Subkomponenten von Windenergieanlagen vermessen, beispielsweise Komponenten von Rotorblättern mit Abmessungen von einigen Metern. Vorzugsweise werden mehrere Komponenten an unterschiedlichen Stellen des Rotorblatts entnommen und in Prüfständen vermessen. Daraus können Rückschlüsse auf das Verhalten des gesamten Rotorblatts gezogen werden. Dafür werden für die Subkomponente Bedingungen simuliert, die den Bedingungen entsprechen, die dann bestehen, wenn die Subkomponente in dem Rotorblatt angeordnet ist und letzteres unter Belastung steht. Um eine derartige Belastung der Subkomponente zu erreichen, erfolgt die Krafteinleitung einer Prüfkraft an den Enden der Subkomponente an zuvor berechneten Einspannstellen, die die Krafteinleitungspunkte darstellen, die so gewählt werden, dass eine ausgeübte Belastung auf die Subkomponente eben der Belastung entspricht, die die Subkomponente bei einer bestimmten Belastung des gesamten Rotorblatts erfahren würde.

Dokument CH 702 812 A2 zeigt eine Einrichtung zur Bestimmung von Materialeigenschaften von Snowboards oder Ski oder dergleichen, insbesondere zur Bestimmung mechanischer Eigenschaften, die universelle Testmöglichkeiten bieten soll und zugleich einfach in Aufbau und Anwendung ist. Dies ist dadurch gelöst, dass die Einrichtung mindestens ein Paar relativ zueinander bewegliche Auflage- und Spannelemente aufweist, die in mindestens einer Achsrichtung, bevorzugt gemeinsam, verschiebbar und um ihre Längsachse drehbar angeordnet sind.

Dokument DE 10 2008 048 131 A1 zeigt eine Radlager-Messeinrichtung zur Erfassung der Reibkraft in einem Radlager, welches für ein Kraftfahrzeug bestimmt ist. Dabei erfolgt eine Beseitigung von Messfehlern durch unterschiedliche alternative oder kumulative Maßnahmen. Über eine Kalibriereinrichtung kann eine im Betrag bekannte Reibkraft simuliert werden, so dass das Ausgangssignal von Sensoren entsprechend kalibriert werden kann für Messungen einer Reibkraft in einem Radlager, wenn die Kalibriereinrichtung deaktiviert ist. Weitere Korrekturmöglichkeiten sind gegeben durch Antrieb eines Antriebsaggregats der Radlager-Messeinrichtung mit unterschiedlichem Drehsinn.

Dokument GB 2548589 A zeigt eine Vorrichtung zum Testen von Windturbinenrotorblattprüfkörpern und eine entsprechende Methode. Die Vorrichtung umfasst erste und zweite Stützstrukturen und einen Aktuator, mit dem der Prüfkörper zyklisch in eine erste transversale Richtung gebogen werden kann. Die erste und die zweite Stützstruktur weisen erste und zweite Halter auf, mit welchen erste und zweite Enden des Prüfkörpers gehalten werden können, so dass die longitudinale Richtung des Prüfkörpers sich zwischen dem ersten und dem zweiten Halter erstreckt. Die erste und die zweite Stützstruktur sind so angeordnet, dass der erste und der zweite Halter in eine zweite transversale Richtung rotierbar sind, die orthogonal zu der ersten transversalen Richtung und zu der longitudinalen Richtung des Prüfkörpers ist. CN 107 271 283 A offenbart einen Prüfstand zum mechanischen Testen eines Betonelements.

Um einen Prüfkörper entsprechend belasten zu können und die Auswirkungen der Krafteinwirkung studieren zu können, ist es wichtig, einen Prüfstand bereitzustellen, der es erlaubt, einen Prüfkörper so einzuspannen, dass die Prüfkraft auf effiziente und kontrollierte Weise an gewünschten Angriffspunkten und in einer gewünschten Richtung in den Prüfkörper eingeleitet werden kann. Ferner soll der Prüfkörper während des Versuchs gut zugänglich sein und so eingespannt sein, dass er während des Prüfverfahrens nicht anfängt zu rotieren, um die Auswirkungen der Krafteinwirkung gut überprüfen zu können. Weiterhin sollen schädigende Kräfte auf Einspannvorrichtungen, mit welchen die Prüfkörper eingespannt werden, reduziert werden.

Dies wird durch einen Prüfstand gemäß dem unabhängigen Anspruch 1 geleistet. Vorteilhafte Ausführungen ergeben sich aus den abhängigen Unteransprüchen.

Ein solcher Prüfstand weist zwei Einspannvorrichtungen auf, zwischen denen der Prüfkörper an Außenflächen eingespannt werden kann und mittels welcher eine Prüfkraft eingeleitet wird. Die Krafteinleitung soll dann über die Einspannvorrichtungen und entlang einer Achse, welche die beiden Einspannvorrichtungen verbindet, erfolgen, so dass eine Wirklinie der Kraft im Wesentlichen mit dieser Achse koinzidiert.

Ein Prüfstand gemäß der Erfindung umfasst einen Träger. Der Träger ist mit beispielsweise einem Rahmen des Prüfstands, einem anderen Teil des Prüfstands, einer Wand oder einem Boden beweglich verbunden. Der Träger ist dabei auf einer vorgegebenen Bahn beweglich.

Der Träger ist durch ein bewegliches Verbindungsmittel, wie beispielsweise Rollen, Gleitlager oder ein oder mehrerer Scharniere oder Gelenke, mit dem Rahmen des Prüfstands, dem anderen Teil des Prüfstands, der Wand oder dem Boden beweglich verbunden. Die Bahn, auf welcher sich der Träger bewegen kann, ist durch das jeweilige bewegliche Verbindungsmittel vorgegeben.

In manchen Ausführungen ist der Träger durch Rollen oder Gleitlager so verbunden, dass sich der Träger parallel verschieben lässt. Die vorgegebene Bahn ist dementsprechend eine lineare Bahn.

In anderen Ausführungen ist der Träger durch ein oder mehrere Scharniere oder Gelenke verbunden, so dass der Träger um die Scharniere oder Gelenke gedreht werden kann und die vorgegebene Bahn einem Kreis bzw. Kreisabschnitt folgt.

Der Träger ist vorzugsweise als Balken ausgebildet.

Eine Aktorik, zum Beispiel als pneumatischer, hydraulischer oder elektrischer Prüfzylinder ausgebildet, ist mit dem Träger verbunden und kann diesen auf seiner vorgegebenen Bahn bewegen, indem die Aktorik entweder komprimiert oder expandiert wird.

Eine erste der beiden Einspannvorrichtungen ist an dem Träger befestigt und eine zweite der beiden Einspannvorrichtungen in einer Achse mit der ersten der beiden Einspannvorrichtungen angeordnet, so dass zwischen den beiden Einspannvorrichtungen der Prüfkörper an Prüfkörperaußenflächen eingespannt und von den Einspannvorrichtungen gehalten werden kann. Wird der Träger durch die Aktorik auf seiner Bahn bewegt, wird über die erste der beiden Einspannvorrichtungen, die an dem Träger befestigt ist, auf den Prüfkörper eine Prüfkraft ausgeübt. Es kann eine Zug- oder eine Druckkraft ausgeübt werden, je nachdem ob die durch die Aktorik bewirkte Bewegung des Trägers und somit die Bewegung der ersten der beiden Einspannstellen in Richtung der zweiten der beiden Einspannstellen oder von ihr weg erfolgt.

Damit die Prüfkraft, wie oben gefordert, im Wesentlichen entlang der die Einspannvorrichtungen verbindenden Achse wirkt, also eine Wirklinie besitzt, die mit der Achse koinzidiert, wird in einer Ausführung der durch Rollen mit dem Rahmen des Prüfstands verbundene Träger entlang der Achse parallel verschoben. Vorzugsweise ist der Träger orthogonal zu der Achse ausgerichtet. In einer anderen Ausführung wird zum Erzeugen einer Druckbelastung ein mit einem Scharnier an dem Rahmen, am Boden oder an einer Wand befestigter Balken, der in einer Ausgangsposition orthogonal zu der Achse steht, durch die Aktorik um das Scharnier gedreht, beispielsweise in Richtung der zweiten Einspannvorrichtung. Der Träger weicht dabei typischerweise nicht wesentlich von seiner Ausgangsposition ab, so dass die Achse und die Wirklinie sich während des Versuchs nicht wesentlich ändern.

Die Einspannstellen, an welchen die Einspannvorrichtungen an den Prüfkörperaußenflächen fixiert sind, stellen die Krafteinleitungspunkte der Prüfkraft in den Prüfkörper dar. Die Prüfkraft wird also nicht vollflächig an den Außenflächen eingeleitet, sondern an den Einspannstellen, an welchen die Einspannvorrichtungen angreifen. Die Einspannvorrichtungen umfassen Kugelgelenke oder sind als Kugelgelenke ausgebildet und sind damit derart flexibel, dass eine Verdrehung der Prüfkörperaußenflächen, welche mit einer Biegung des Prüfkörpers einhergehen kann, durch die Einspannvorrichtungen toleriert werden kann.

Die Kugelgelenke, die eine im Versuch auftretende Verdrehung der Außenflächen ermöglichen sollen, erlauben dem Prüfkörper, aufgrund der Anordnung der Kugelgelenke in einer Achse, eine Torsion um diese Achse. Es kann aber auch zu einer Rotation, das heißt einer Starrkörperrotation, um diese Achse kommen. Dieser Rotationsfreiheitsgrad ist unerwünscht, da beispielsweise optische Messapparaturen, welche zur Messung physikalischer Größen unter Belastung, beispielsweise zur Messung der Elongation, eingesetzt werden, nicht an dem Prüfkörper fixiert sind und daher der entsprechende Wert nicht mehr gemessen werden kann, wenn der Prüfkörper rotiert, d.h. als Starrkörper rotiert. Alternative flexible Einspannvorrichtungen, die eine Verdrehung der Prüfkörperaußenflächen erlauben, die aber keinen Rotationsfreiheitsgrad haben, wie beispielsweise Kardangelenke oder I-Träger, haben sich in der Praxis als nachteilig herausgestellt, da sie unter anderem keine Torsion zulassen. Alternativ können die sich einander gegenüberliegenden Einspannvorrichtungen ein Kardangelenk und ein gegenüberliegendes Kugelgelenk sein. Damit wird zumindest an einem Prüfkörperende eine Torsion erlaubt.

Eine Rotation, also Starrkörperrotation, des Prüfkörpers um eine Achse entlang der Wirklinie (beispielsweise die horizontale Längsachse) soll gemäß der Anmeldung eingeschränkt bzw. verhindert werden, optional jedoch soll eine Verdrehung senkrecht zur Achse sowie eine Torsion weiterhin möglich sein. Dabei unterbindet ein elastisches Element, beispielsweise eine Feder, eine Rotation um die Längsachse , lässt eine Verdrehung um eine Achse innerhalb der Ebene senkrecht zur Längsachse jedoch zu.

Dies kann durch eine entsprechende Aufhängung des elastischen Elements bewerkstelligt werden.

Gemäß der Anmeldung ist der Prüfstand in manchen Ausführungen so ausgebildet, dass die Achse horizontal verläuft und der Prüfkörper entlang der horizontalen Achse eingespannt und belastet wird.

Weiterhin kann die Rotation, also Starrkörperrotation, des Prüfkörpers in einem solchen Prüfstand durch die Schwerkraft zusätzlich zum elastischen Element verhindert werden. Nur in den Fällen, in denen der Prüfkörper so ausgebildet und eingespannt ist, dass der oberhalb und der unterhalb der Achse liegende Teil des Prüfkörpers die gleiche Masse haben, kann ein derartig horizontal eingespannter Prüfkörper spontan anfangen zu rotieren. Typischerweise werden die Prüfkörper zum Erzeugen einer speziellen Belastung asymmetrisch eingespannt, sodass sich der Prüfkörper in eine Gleichgewichtslage begibt, in der der Massenschwerpunkt unterhalb der Achse liegt. Daher reicht eine horizontale Ausrichtung häufig aus, um die Rotation des Prüfkörpers zu verhindern.

Der Prüfstand kann in anderen Ausführungen auch so ausgebildet sein, dass die Achse vertikal verläuft und der Prüfkörper dementsprechend hochkant eingespannt wird und die Kraft von oben vertikal eingeleitet wird. Das kann beispielsweise bei bestimmten Prüfkörperabmessungen vorteilhaft sein, beispielsweise wenn ein bestimmter Prüfkörper in der Richtung der Krafteinleitung weniger ausgedehnt ist als in einer anderen Richtung. Ein so eingespannter Prüfkörper kann aber, wenn keine weiteren Elemente vorgesehen sind, während des Versuchs anfangen zu rotieren. Die Anmeldung schlägt daher vor, ein elastisches Element, beispielsweise als Feder ausgebildet, bereitzustellen, mit welchem der Prüfkörper an einem Rahmen des Prüfstands oder mit einer Wand verbunden wird, so dass die Rotation verhindert wird. Die Feder oder das elastische Element wird vorteilhaft horizontal angeordnet. Dazu ist es vorteilhaft, wenn die Feder oder das elastische Element eine möglichst geringe Federkonstante aufweist, damit die durch die Feder oder das elastische Element auf den Prüfkörper wirkende horizontale Kraft keine zu großen schädigenden Querkräfte auf die Kugelgelenke der Einspannvorrichtungen mit sich bringt.

Das elastische Element wird ferner auch bei Prüfständen mit horizontaler Einspannung verwendet , wenn der Prüfkörper derart ausgebildet und eingespannt ist, dass er während des Versuchs anfangen kann zu rotieren. Im Folgenden werden Prüfstände zur horizontalen sowie zur vertikalen Einspannung eines Prüfkörpers gemäß der Anmeldung detailliert beschrieben.

In einer Ausführung, in der der Prüfstand dazu ausgebildet ist, den Prüfkörper hochkant einzuspannen und vertikal zu belasten, umfasst der Prüfstand einen Rahmen mit vertikalen Seitenteilen, mit welchen der Träger, der horizontal angeordnet ist, mittels Rollen verbunden ist. Der Träger kann dann aufgrund der Rollen parallel auf und ab bewegt werden. Die erste der beiden Einspannvorrichtungen ist vorzugsweise zentral an dem Träger befestigt. Die zweite der beiden Einspannvorrichtungen ist unter der ersten der beiden Einspannvorrichtungen am Boden fixiert, so dass die Achse zwischen den Einspannvorrichtungen genau vertikal verläuft. Die Aktorik zum Bewegen des Trägers ist in einer Ausführung oben an dem Träger befestigt und mit einem oberen Querstück des Rahmens verbunden. Wenn die Aktorik beispielsweise expandiert, wird der Träger nach unten parallel verschoben und eine Druckbelastung auf den Prüfkörper ausgeübt. Die Aktorik liegt vorteilhaft in der verlängerten Achse. Es können in einer Ausführung auch mehrere Aktoriken vorgesehen sein, die derart symmetrisch angeordnet sind, dass der Träger weiterhin parallel verschoben wird, wenn beide Aktoriken gleichzeitig expandiert oder komprimiert werden. Beispielsweise können zwei Aktoriken vorgesehen sein, die in der Nähe von zwei entgegengesetzten Enden des Trägers, mit dem gleichen Abstand zu dem jeweiligen Ende des Trägers, angeordnet sind.

Gemäß der beanspruchten Erfindung wird in dieser Ausführung eine Feder oder ein elastisches Element als Stütze bereitgestellt, zum Beispiel so, dass der Prüfkörper mit der Wand oder dem vertikalen Teil des Prüfstands verbunden wird und nicht rotieren kann.

In einer anderen Ausführung, in der der Prüfstand dazu ausgebildet ist, einen Prüfkörper vertikal einzuspannen, ist der Träger an einem Ende mittels eines Scharniers mit einer Wand oder einem vertikalen Teil des Prüfstands verbunden. In seiner Ausgangsposition ist der Träger horizontal ausgerichtet. In einem mittleren Bereich des Trägers ist die erste der beiden Einspannvorrichtungen angeordnet, und die zweite der beiden Einspannvorrichtungen ist am Boden angeordnet, wobei die Achse, die die beiden Einspannvorrichtungen verbindet, vertikal verläuft. Die Aktorik ist vorteilhaft in der Nähe eines dem Scharnier abgewandten Endes des Balkens unten am Balken befestigt und mit dem Boden verbunden, beispielsweise über eine Stange. Alternativ hierzu können die Stange oben und die Aktorik unterhalb angeordnet sein. Der Prüfkörper ist zwischen der Wand oder dem vertikalen Teil des Prüfstands und der Aktorik eingespannt. Durch Kompression der Aktorik kann eine Druckbelastung erzeugt werden. Der Träger wirkt dabei als Hebelarm. Solange der Träger nur wenig aus seiner Ausgangsposition heraus bewegt wird, verbleibt die Achse und somit auch die Wirklinie im Wesentlichen vertikal. Weicht der Träger leicht von seiner Ausgangsposition ab, kann diese Abweichung durch die flexibel ausgebildeten Einspannvorrichtungen toleriert werden. Gemäß der beanspruchten Erfindung wird in dieser Ausführung eine Feder oder ein elastisches Element als Stütze bereitgestellt, zum Beispiel so, dass der Prüfkörper mit der Wand oder dem vertikalen Teil des Prüfstands verbunden wird und nicht rotieren kann.

In einer ersten Ausführung, in der der Prüfstand dazu ausgebildet ist, einen Prüfkörper horizontal einzuspannen, ist der Träger über das Scharnier mit dem Boden verbunden und ragt vertikal nach oben. In einem mittleren Bereich des Trägers ist die erste der beiden Einspannvorrichtungen angeordnet, und die zweite der beiden Einspannvorrichtungen ist auf gleicher Höhe wie die erste der beiden Einspannvorrichtungen an einer Wand angeordnet. Die Achse verläuft dann horizontal. An einem dem Scharnier abgewandten, oberen Ende des Trägers ist die Aktorik angeordnet. Die Aktorik ist auf der gleichen Seite wie die Einspannvorrichtung an dem Träger befestigt und beispielsweise über eine Stange mit der Wand verbunden. Durch Kompression der Aktorik wird eine Druckbelastung auf den Prüfkörper ausgeübt. Der Träger wird hier wieder als Hebelarm genutzt. Durch die horizontale Ausrichtung wird der Prüfkörper am Rotieren gehindert. Der Aufbau kann als eine um 90 Grad gedrehte Variante der zuletzt genannten Ausführung mit vertikaler Prüfkörperausrichtung verstanden werden. In dieser ersten Ausführung kann das Scharnier den Träger anstatt mit dem Boden auch mit einer weiteren Wand verbinden. Gemäß der beanspruchten Erfindung, ist weiterhin das elastische Element vorgesehen.

In einer zweiten Ausführung, in der der Prüfstand dazu ausgebildet ist, einen Prüfkörper horizontal einzuspannen, ist wie in der letztgenannten Ausführung der Träger über das Scharnier mit dem Boden verbunden und ragt vertikal nach oben. Die erste der beiden Einspannvorrichtungen ist wieder in einem mittleren Bereich des Trägers angeordnet, und die zweite der beiden Einspannvorrichtungen an der Wand, auf gleicher Höhe wie die erste der beiden Einspannvorrichtungen. Die Aktorik ist jedoch im Gegensatz zur letztgenannten Ausführung auf der anderen Seite wie die erste der beiden Einspannvorrichtungen an dem Träger befestigt und mit einer weiteren Wand verbunden. In dieser Ausführung wird eine Druckbelastung auf den Prüfkörper durch Expansion der Aktorik bewirkt. Der Abstand zwischen der weiteren Wand und dem Träger kann so gewählt sein, dass die Aktorik die weitere Wand und den Träger verbindet, ohne dass eine Stange notwendig ist. In einer Variante der zweiten Ausführung verbindet das Scharnier den Träger nicht mit dem Boden, sondern mit der weiteren Wand. Der Abstand zwischen dem Träger und der weiteren Wand ist dann so gewählt, dass das Scharnier zwischen dem Träger und der weiteren Wand angeordnet werden kann. In dieser Konfiguration ist der Abstand typischerweise zu klein, um eine Aktorik zwischen dem Träger und der weiteren Wand bereitzustellen. Daher ist der Träger so geformt, dass ein oberer Teil des Trägers einen größeren Abstand zu der Wand aufweist als ein unterer Teil des Trägers. Beispielsweise weist der Träger als oberen Teil ein versetztes Stück auf, das mit dem unteren Teil des Trägers über ein horizontales oder schräges Element verbunden ist. Die Aktorik kann dann zwischen der weiteren Wand und dem versetzten Stück angeordnet werden. Gemäß der beanspruchten Erfindung, ist weiterhin das elastische Element vorgesehen.

Je nach Aktorik und gewünschter Belastung kann die erste oder die zweite der beiden vorgenannten Ausführungen zur horizontalen Prüfkörpereinspannung Vorteile haben. Wird beispielsweise eine Druckbelastung angestrebt und eine Aktorik verwendet, die dazu geeignet ist, zu expandieren, ist die zweite Ausführung vorteilhaft. Ist die Aktorik dazu ausgebildet, zu komprimieren, ist für eine Druckbelastung die erste Ausführung vorteilhaft.

In den Ausführungen, in denen ein Scharnier vorgesehen ist, wird durch die Anordnung der Aktorik in der Nähe des dem Scharnier abgewandten Endes des Trägers der Träger als Hebelarm ausgenutzt. So kann die Krafteinwirkung bei einer gegebenen Maximalkraft der Aktorik maximiert werden. Der Abstand der Aktorik von dem Scharnier kann zu diesem Zweck variiert werden. Die Aktorik kann so auf besonders günstige Arbeitsbereiche hinsichtlich Kraft oder Weg eingestellt werden. So kann beispielsweise eine Aktorik mit kleinerer Nennkraft als der benötigten Prüfkraft verwendet werden.

In jeder der oben genannten Ausführungen kann es außerdem vorgesehen sein, dass der Prüfstand ein digitales Bildkorrelationssystem aufweist. Das digitale Bildkorrelationssystem ist vorzugsweise als 3D-Bildkorrelation ausgebildet und umfasst eine optische Messapparatur, etwa ein 3D-Kamerasystem mit mindestens zwei Kameras. Das digitale Bildkorrelationssystem kann dafür eingerichtet sein, eine Verformung des Prüfkörpers zu überwachen bzw. zu berechnen. Dabei wird typischerweise eine Ist-Position von auf dem Prüfkörper liegenden Punkten mit einer Ausgangsposition dieser Punkte verglichen. Das digitale Bildkorrelationssystem ist dabei vorzugsweise dafür eingerichtet, eine Rotation, d.h. Starrkörperrotation, des Prüfkörpers von zumindest ±5° und beispielsweise bis zu ±10° um die Achse, um die der Prüfkörper seinen Rotationsfreiheitsgrad besitzt, zu erfassen. So kann es ermöglicht werden, diese Rotation zu tolerieren. Der Winkel der Rotation ist dabei ausgehend von einer Ausgangsruheposition des Prüfkörpers zu verstehen. Dazu können die Kameras so angeordnet werden, dass bei Rotationen von weniger als 5° bzw. weniger als 10° in jede Richtung die auf dem Prüfkörper liegenden Punkte weiterhin von den Kameras erfasst werden. Das digitale Bildkorrelationssystem kann dann dafür eingerichtet sein, diese Rotationen in einem Verarbeitungsschritt bei der Berechnung der Verformung zu berücksichtigen. Errechnete Werte, etwa Ist-Positionen der Punkte, können entsprechend unter Berücksichtigung der Rotation korrigiert werden.

Die Rotationen, bei denen der Prüfkörper aus einer anfänglichen Ruhelage ausgelenkt wird, die also einer Starrkörperrotation entsprechen und nicht auf einer Verformung des Prüfkörpers beruhen, lassen sich durch den gezeigten Prüfstand auf beispielsweise 5° oder 10° reduzieren. So wird die beschriebene Korrektur möglicher verbleibender Starrkörperrotationen durch das beschriebene Bildkorrelationssystem vorteilhaft ermöglicht.

Für anisotrope Prüfkörper mit inhomogenem Aufbau, wie sie im Fall von Subkomponenten von Windenergieanlagen in der Regel vorliegen, sind elastische Eigenschaften in unterschiedliche Richtungen unterschiedlich. Eine im Zusammenhang mit solchen anisotropen Prüfkörpern hilfreiche Definition betrifft die Schwerpunktslinie oder elastische Schwerpunktslinie eines Körpers bzw. Prüfkörpers. Zur Definition der Schwerpunktslinie wird dem Prüfkörper zuerst eine Längsachse zugewiesen. Die Prüfkraft soll entlang der Längsachse oder mit einer Komponente entlang der Längsachse des Prüfkörpers, welche die Außenflächen schneidet, eingeleitet werden. Die Außenflächen können orthogonal zur Längsachse liegen oder schräg dazu. Die Längsachse kann beliebig definiert werden und dient hier als Referenzachse. Die Längsachse kann beispielsweise im Falle von Komponenten, die Windenergieanlagenrotorblättern entstammen, durch die Gerade definiert sein, die orthogonal auf dem Flansch der Rotorblätter steht. Das heißt, die Ebene des Flansches, mit dem die Rotorblätter an der Nabe befestigt werden können, dient als eine Referenzebene. Die Längsachse kann dabei beispielsweise durch den Mittelpunkt des Flansches verlaufen. Es kann aber auch eine andere Referenzachse oder Referenzfläche gewählt werden. Somit kann ein Bezugssystem definiert werden, das an dem Prüfkörper fixiert ist.

Zerlegt man den Prüfkörper orthogonal zu der definierten Längsachse in infinitesimale Scheiben, so lässt sich für jede Scheibe ein elastischer Schwerpunkt berechnen. Der elastische Schwerpunkt ist dadurch definiert, dass ein prismatischer Körper mit Querschnitt der Scheibe kein Biegemoment erfährt, wenn die Prüfkraft beidseitig an diesem Schwerpunkt angreift und parallel zu der Längsachse, orthogonal zu den Außenflächen, wirkt. Bei prismatischen Körpern aus einem homogenen Material ist der elastische Schwerpunkt gleich der Flächenschwerpunkt. Inhomogene Körper mit einem über eine infinitesimale Ebene variablen Elastizitätsmodul besitzen einen elastischen Schwerpunkt, auch ideeller Schwerpunkt genannt, der nicht dem Flächenschwerpunkt entspricht, sondern beispielsweise hin zu Regionen größeren Elastizitätsmoduls verschoben ist. Zur Theorie der Berechnung von allgemeinen elastischen oder ideellen Schwerpunkten kann beispielsweise das "Lehrbuch der Technischen Mechanik - Elastostatik, Mit einer Einführung in Hybridstrukturen" von Rolf Mahnken, erschienen im Springer-Verlag, Berlin und Heidelberg 2015, herangezogen werden. Alternativ lassen sich für jede infinitesimale Scheibe des Prüfkörpers auch zwei elastische Achsen definieren, deren Schnittpunkt den elastischen Schwerpunkt darstellt. Für einen Körper lässt sich also eine elastische Schwerpunktslinie definieren, die durch die elastischen Schwerpunkte jeder infinitesimalen Scheibe verläuft.

Durch eine gezielte Krafteinleitung und Wahl der Einspannstellen können unterschiedliche Belastungsbedingungen generiert werden. Koinzidiert die Wirklinie mit der Schwerpunktslinie des Prüfkörpers, wird kein Biegemoment eingeleitet, und der Prüfkörper verbiegt sich nicht. In manchen Fällen ist ein Biegemoment gewünscht, und die Einspannstellen am Prüfkörper werden mit einer Exzentrizität, also einem Abstand, zur Schwerpunktslinie gewählt, um ein Biegemoment in den Prüfkörper einzuleiten.

In manchen Ausführungen werden an den Prüfkörperaußenflächen Lasteinleitungsrahmen zur Verfügung gestellt. Die Lasteinleitungsrahmen können beispielsweise angeklebt oder anlaminiert werden. Die Einspannstellen befinden sich dann nicht mehr direkt am Prüfkörper, sondern an den Lasteinleitungsrahmen, und die eingeleitete Kraft wird über die Lasteinleitungsrahmen in den Prüfkörper eingeleitet. Dadurch kann beispielsweise eine unerwünschte Deformation der Prüfkörperaußenflächen an den Einspannstellen verhindert werden. Ein Lasteinleitungsrahmen kann eine Platte und optional einen weiteren Aufbau aufweisen, beispielsweise eine Holzkonstruktion, wobei der Prüfkörper mit dem weiteren Aufbau verklebt werden kann.

In manchen Ausführungen kann zumindest eine der Lasteinleitungsrahmen über die jeweilige Außenfläche hinaus ragen, an welcher sie befestigt ist, so dass die Einspannstelle auch außerhalb der Prüfkörperaußenfläche liegen kann. Dadurch kann die Exzentrizität der Einspannstelle noch weiter erhöht werden, indem die Einspannstelle so gewählt wird, dass sie an der Platte außerhalb der Außenfläche des Prüfkörpers liegt.

Beispielhafte Ausführungen anmeldungsgemäßer Prüfstände sind in den Figuren gezeigt.

Es zeigen:
- Fig. 1: einen Prüfstand mit Rollen und parallel verschiebbarem Balken, gemäß der beanspruchten Erfindung;
- Fig. 2: einen Prüfstand mit einem Scharnier und drehbeweglichem Balken zur vertikalen Einspannung eines Prüfkörpers, gemäß der beanspruchten Erfindung;
- Fig. 3a-c: einen Prüfstand mit einem Scharnier und drehbeweglichem Balken zur horizontalen Einspannung eines Prüfkörpers mit unterschiedlich angeordneter Aktorik, welcher in der darstellen Ausführung (es fehlt das elastische Element) nicht entsprechend der beanspruchten Erfindung ist.

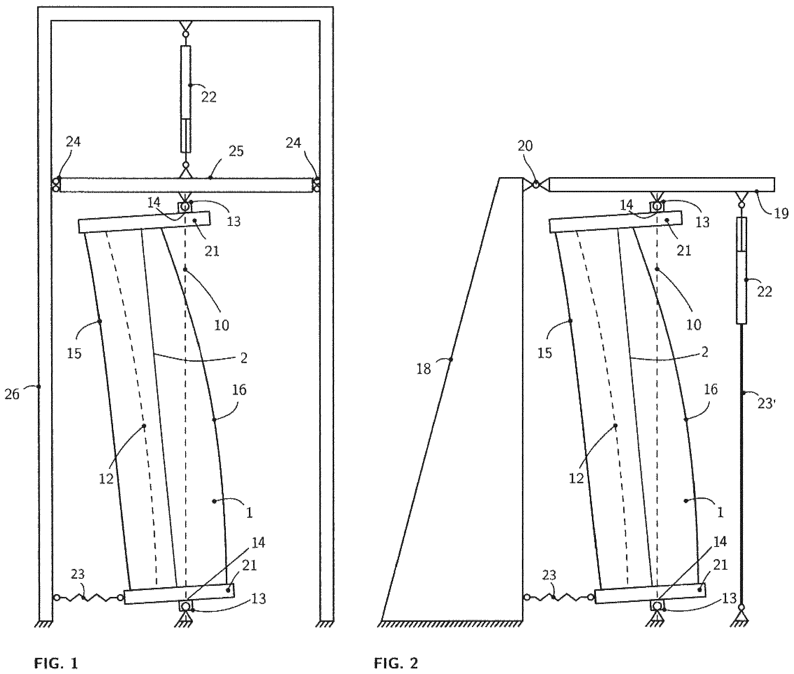

Fig. 1 zeigt einen Prüfstand gemäß der beanspruchten Erfindung in einer ersten Ausführung. Ein Träger 25, ausgebildet als Balken, ist horizontal in einem Rahmen 26 angeordnet. An einem ersten und einem zweiten Ende des Trägers ist der Träger mittels Rollen 24 mit vertikalen Seitenteilen des Rahmens 26 beweglich verbunden und innerhalb des Rahmens auf einer festen Bahn parallel auf und ab verschiebbar. Eine vertikal ausgerichtete Aktorik 22, welche mit einem oberen Querstück des Rahmens 26 und dem Träger 25 verbunden ist, ist dazu ausgebildet, den Träger auf seiner vorgegebenen Bahn parallel auf und ab zu verschieben. Ein Prüfkörper 1 wird unterhalb des Trägers 25 angeordnet. Der Prüfkörper ist an zwei Außenflächen mittels zweier Einspannvorrichtungen 13, welche an Einspannstellen 14 an dem Prüfkörper bzw. an an dem Prüfkörper angebrachten Lasteinleitungsrahmen befestigt sind, eingespannt, wobei eine erste, obere der beiden Einspannvorrichtungen 13 an dem Träger 25 befestigt ist und eine zweite, untere der beiden Einspannvorrichtungen 13 auf dem Boden fixiert ist, so dass eine Achse 10, welche durch die beiden Einspannvorrichtungen 13 verläuft, vertikal verläuft. Die Aktorik 22 und die obere der beiden Einspannvorrichtungen 13 sind vorteilhaft zentral an dem Träger 25 in der Mitte zwischen den Rollen 24 angeordnet. Durch Expansion der Aktorik 22 wird in der Anordnung in Figur 1 ein Senken des Trägers 25 bewirkt und eine Druckbelastung in den Prüfkörper eingeleitet oder durch Kompression der Aktorik 22 ein Heben des Trägers 25 bewirkt und somit eine Zugbelastung eingeleitet. Die Bewegung des Trägers erfolgt parallel zu der Achse 10, und eine Wirklinie einer so eingeleiteten Prüfkraft koinzidiert dadurch mit der Achse 10. Wird ein Prüfkörper wie in der Figur 1 gezeigt belastet, verformt sich aufgrund des Verhältnisses der Schwerpunktslinie 12 zu der Achse 10, welche mit der Wirklinie koinzidiert, ein zweiter Prüfkörperrand 16 stärker als ein erster Prüfkörperrand. Der Prüfkörper wird also, je nachdem ob eine Druck- oder Zugbelastung vorliegt, auf der Seite des zweiten Prüfkörperrands 16 stärker gestaucht oder gedehnt als auf der Seite des zweiten Prüfkörperrands 15, sofern die Biegesteifigkeit und die Axialsteifigkeit entlang des Körpers konstant sind. Das hat eine Verdrehung der Prüfkörperaußenflächen zueinander zur Folge. Die beiden Einspannvorrichtungen 13 sind daher als Kugelgelenke ausgebildet, um eine solche mit einer Biegung einhergehende Verdrehung der Prüfkörperaußenflächen tolerieren zu können. Da es sich bei den flexiblen Einspannvorrichtungen 13 um Kugelgelenke handelt, könnte ein Prüfkörper 1, wenn er nicht weiter fixiert würde, um die Achse 10 rotieren. Daher ist ein elastisches Element 23, beispielsweise als Feder ausgebildet, vorgesehen, welches den Prüfkörper 1 mit dem Rahmen 26 verbindet und den Prüfkörper gegen Rotieren um die Achse 10 sichert. Dabei kann die Feder beispielsweise entlang einer Achse mit dem Lasteinleitungsrahmen 21 verbunden sein, wobei die Achse senkrecht aus der Bildebene heraus verläuft. Auf diese Weise wird eine Rotation um die Achse 10 verhindert, eine Verdrehung senkrecht dazu jedoch ermöglicht. Da die notwendige Rückstellkraft zur Unterbindung der Rotation um die Achse 10 relativ klein ist, kann eine geeignete Federkonstante, beispielweise eine kleine Federkonstante die die Rotation um die Achse 10 einschränkt bzw. verhindert, die kleine Verdrehungen um beispielsweise die Achse aus der Bildebene heraus jedoch toleriert, gewählt werden.

An den Prüfkörperaußenflächen, an welchen die Prüfkraft eingeleitet wird, werden vorteilhafte Lasteinleitungsrahmen 21 angeordnet. Diese Lasteinleitungsrahmen 21 werden beispielsweise mit den Prüfkörperaußenflächen verklebt oder an die Prüfkörperaußenflächen anlaminiert oder verschraubt. Die Einspannstellen 14 liegen dann nicht direkt an den Prüfkörperaußenflächen, sondern an den Lasteinleitungsrahmen. Dadurch kann eine Deformation der Prüfkörperaußenflächen durch die Einspannvorrichtungen 13 verhindert werden. Ferner können die Lasteinleitungsrahmen über die Prüfkörperaußenflächen hinausragen, so dass die Einspannstellen 14 so gewählt werden können, dass sie außerhalb der Prüfkörperaußenflächen liegen. Eine Schwerpunktlinie 12 des Prüfkörpers 1 ist für eine Längsachse 2 des Prüfkörpers 1 definiert und verläuft durch elastische Schwerpunkte infinitesimal dicker Scheiben, in welche sich der Prüfkörper einteilen lässt und die orthogonal zu der Längsachse 2 liegen. Die Wirklinie, welche entlang der Achse 10 verläuft, weist eine Exzentrizität zu der Schwerpunktlinie 12 auf. Dadurch wird ein Biegemoment in den Prüfkörper 1 eingeleitet. Ein erster Prüfkörperrand 15 wird im vorliegenden Beispiel konstanter Steifigkeiten (s.o.) weniger stark deformiert als ein zweiter Prüfkörperrand 16. Dadurch, dass die Einspannstellen 14 an Lasteinleitungsrahmen 21 liegen, können die Einspannstellen 14 außerhalb der Prüfkörperaußenflächen liegen, um die Exzentrizität noch weiter zu erhöhen. Im in der Figur 1 gezeigten Beispiel ist die obere der beiden Einspannstellen 14 so gewählt, dass sie außerhalb der oberen Prüfkörperaußenfläche liegt, so dass oben ein besonders großes Biegemoment eingeleitet wird, wobei die Exzentrizität der unteren der beiden Einspannstellen 14 gering ist, so dass das Biegemoment von unten nach oben kontinuierlich größer wird. Der Prüfkörper 1 wird also entsprechend gekippt, um oben und unten eine gewünschte Exzentrizität zu erreichen. Dadurch können unterschiedliche Belastungen erreicht werden. Der in der Figur 1 gezeigt Aufbau kann auch so modifiziert werden, dass statt oder zusätzlich zu der einen Aktorik 22 mehrere Aktoriken eingesetzt werden. Die Aktoriken werden vorteilhaft so angeordnet, dass der Träger 25 gleichmäßig symmetrisch belastet wird. Beispielsweise werden zwei zusätzliche Aktoriken verwendet, die im gleichen Abstand rechts und links von der Aktorik 22 angeordnet werden. Der Aktuator kann an seinen Enden fest eingespannt oder über Gelenke eingespannt sein. Im Falle von Gelenken können auftretende Winkelabweichungen der Aktuatorachse von der Achse 10 ausgeglichen werden. Der Balken 25 ist vorzugsweise horizontal.

Figur 2 zeigt einen Prüfstand gemäß der beanspruchten Erfindung, bei dem im Gegensatz zu dem in Figur 1 gezeigten Prüfstand kein umgehender Rahmen vorhanden ist. Ein Balken 19 ist hier wieder horizontal angeordnet und mit einem Scharnier 20 an einer Wand 18 fixiert. An einer der Wand 18 und dem Scharnier 20 abgewandten Seite ist der Träger 19 mit einer Aktorik 22 verbunden, welche über eine Stange 23' mit dem Boden verbunden ist und dazu ausgebildet ist, den Träger 19 um das Scharnier 20 auf einer Kreisbahn aus der Horizontalen zu bewegen. Wie in Figur 1 wird der Prüfkörper 1 an zwei Außenflächen mittels zweier als Kugelgelenke ausgebildeter Einspannvorrichtungen 13 eingespannt, und die erste, obere der beiden Einspannvorrichtungen 13 ist an dem Träger 19 und die zweite, untere der beiden Einspannvorrichtungen 13 auf dem Boden fixiert. Der Prüfkörper 1 ist somit parallel zu der Aktorik 22 angeordnet. So wird hier beispielsweise durch Kompression der Aktorik 22 eine Druckbelastung in den Prüfkörper eingeleitet, oder durch Expansion eine Zugbelastung. In einem Anfangszustand verläuft die Achse 10, welche durch die beiden Einspannvorrichtungen 13 verläuft, vertikal. Der Prüfkörper 1 kann genau wie im in Figur 1 gezeigten Beispiel mittels Lasteinleitungsrahmen 21 eingespannt werden und über ein elastisches Element 23 oder eine Feder mit der Wand 18 verbunden und am Rotieren gehindert werden. Die Exzentrizitäten können wie im Beispiel aus Figur 1 gewählt werden, allerdings kann durch die Anordnung der Aktorik hier ein Hebelarm ausgenutzt werden, so dass eine größere Prüfkraft ausgeübt wird. Ein typischer Prüfkörper 1 wird dabei nicht so stark verformt, dass der Träger wesentlich aus der Horizontalen bewegt wird. Die Wirklinie und die Achse 10 bleiben im Wesentlichen in der Horizontalen.

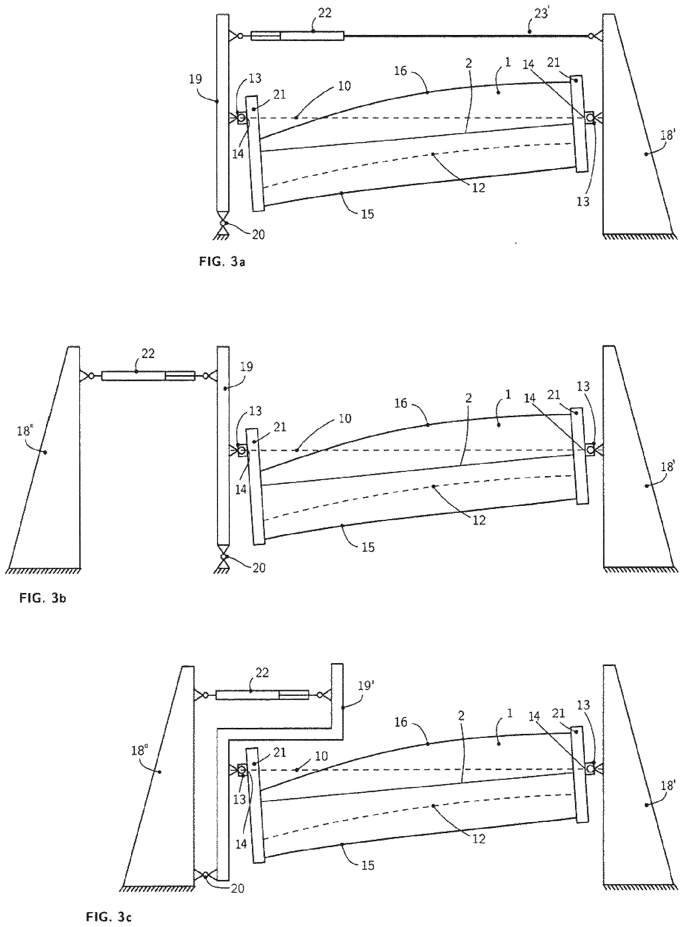

Figur 3a zeigt einen Prüfstand, welcher nicht gemäß der beanspruchten Erfindung ist (es ist in der dargestellten Ausführungsform kein elastisches Element vorgesehen), welcher ähnlich aufgebaut ist wie der Prüfstand aus Figur 2, bei welchem aber die Achse 10 durch die beiden Einspannvorrichtungen 13 im Gegensatz zur Konfiguration aus Figur 2 horizontal verläuft. Das Scharnier 20, um welches der Träger 19 gedreht werden kann, ist nun am Boden angeordnet, und die Aktorik, welche den Träger 19 auf der entsprechenden Bahn bewegen kann, ist über die Stange 23' mit einer Wand 18' verbunden, wobei der Prüfkörper 1 horizontal zwischen dem Träger 19 und der Wand 18' parallel zu der Aktorik 22 eingespannt werden kann, indem Einspannvorrichtungen 13 an dem Träger 19 und an der Wand 18' angeordnet sind, so dass die Achse 10 durch die Einspannvorrichtungen nun horizontal verläuft. Die Exzentrizitäten der Achse 10 zu der Schwerpunktslinie des Prüfkörpers 1 können an beiden Enden des Prüfkörpers 1 wieder durch entsprechendes Kippen eingestellt werden. Die Schwerkraft kann dafür sorgen, dass der Prüfkörper eine stabile Lage einnimmt und während des Prüfversuchs nicht rotiert. Da die Prüfkörper typischerweise asymmetrisch sind und/oder schräg eingespannt werden, ergibt sich für genau eine Lage des Prüfkörpers ein Potentialminimum.

Der Prüfstand weist außerdem ein digitales Bildkorrelationssystem auf, das als 3D-Bildkorrelation ausgebildet ist und eine optische Messapparatur mit zwei Kameras umfasst. Das digitale Bildkorrelationssystem ist dafür eingerichtet, eine Verformung des Prüfkörpers zu überwachen bzw. zu berechnen. Dabei wird eine Ist-Position von auf dem Prüfkörper liegenden Punkten mit einer Ausgangsposition dieser Punkte verglichen. Das digitale Bildkorrelationssystem ist dabei dafür eingerichtet, eine Rotation, d.h. Starrkörperrotation, des Prüfkörpers, ausgehend von seiner anfänglichen Ruhelage, von zumindest ±5° und beispielsweise bis zu ±10° um die Achse, um die der Prüfkörper seinen Rotationsfreiheitsgrad besitzt, zu erfassen und so zu tolerieren. Derartige Auslenkungen sind typische verbleibende Auslenkungen, die auf den bei der gezeigten Vorrichtung bestehenden Rotationsfreiheitsgrad zurückzuführen sind. Größere Auslenkungen werden dabei durch die gezeigte Anordnung vorteilhaft verhindert. Dazu sind die Kameras so angeordnet, dass bei Rotationen von weniger als 5° bzw. weniger als 10° in jede Richtung die auf dem Prüfkörper liegenden Punkte weiterhin von den Kameras erfasst werden. Das digitale Bildkorrelationssystem ist dafür eingerichtet, diese Rotationen, also Starrkörperrotationen, in einem Verarbeitungsschritt bei der Berechnung der Verformung zu berücksichtigen und errechnete Werte entsprechend zu korrigieren. Das heißt, bei einer Überwachung der Ist-Positionen der Punkte werden der Starrkörperrotation zuzuordnende Punktbewegungen als solche identifiziert und anschließend herausgerechnet. So werden relative Punktbewegungen, die für die Verformung, also etwa die Torsion, Kompression oder Elongation des Prüfkörpers relevant sind, extrahiert. Dieses Bildkorrelationssystem kann auch bei jedem anderen der in den Figuren 1 bis 3c gezeigten Prüfstände eingesetzt werden.

Figur 3b zeigt eine Variante des Beispiels aus Figur 3a, welche nicht gemäß der beanspruchten Erfindung ist (es ist in der dargestellten Ausführungsform kein elastisches Element vorgesehen), wobei die Aktorik 22 jedoch nicht zwischen dem Träger 19 und der Wand 18' parallel zu dem Prüfkörper 1 angeordnet ist, sondern auf der anderen Seite des Trägers 19, und dort mit einer weiteren Wand 18" verbunden ist. Durch diese Anordnung wird hier bei Kompression der Aktorik 22 eine Zugbelastung erreicht und durch Expansion der Aktorik 22 eine Druckbelastung. Wie in Figur 2 kann auch in dieser Variante ein Hebelarm vorteilhaft ausgenutzt werden. Da der Abstand zwischen dem Träger 19 und der weiteren Wand 18" geringer sein kann als die Länge des Prüfkörpers, kann in dieser Ausführung auf eine Stange, mit welcher die Aktorik 22 mit der weiteren Wand 18" oder mit dem Träger 19 verbunden wird, verzichtet werden.

Figur 3c zeigt eine Variante des in Figur 3b gezeigten Beispiels, welche nicht gemäß der beanspruchten Erfindung ist (es ist in der dargestellten Ausführungsform kein elastisches Element vorgesehen). Hier ist der Träger als Träger 19' mit versetztem Stück ausgebildet, der so geformt ist, dass ein unterer Teil des Trägers 19' und ein oberer Teil des Trägers 19' zueinander versetzt und durch ein horizontales Element verbunden sind. Dadurch kann der untere Teil des Trägers 19' näher an der weiteren Wand 18" angeordnet sein als derTräger 19 im Beispiel aus Figur 3b und das Scharnier 20 den Träger 19' anstatt mit dem Boden mit der weiteren Wand 18" verbinden. Dadurch, dass der obere Teil in Richtung des Prüfkörpers 1 versetzt ist, findet die Aktorik 22 zwischen dem Träger 19' mit versetztem Stück im oberen Bereich und der weiteren Wand 18" Platz. Somit ist der Prüfstand insgesamt kleiner und platzsparender als in der Ausführung aus Figur 3b.

### Bezugszeichenliste

- 1: Prüfkörper
- 2: Längsachse
- 10: Wirklinie
- 12: Schwerpunktslinie
- 13: Einspannvorrichtung mit Kugelgelenk
- 14: Einspannstelle
- 15: Erster Prüfkörperrand
- 16: Zweiter Prüfkörperrand
- 18: Wand
- 18': Wand
- 18": Wand
- 19: Träger
- 19': Träger mit versetztem Stück
- 20: Scharnier
- 21: Lasteinleitungsrahmen
- 22: Aktorik
- 23: Elastisches Element
- 23': Stange
- 24: Rollen
- 25: Träger
- 26: Rahmen

## Patentansprüche

1. Prüfstand, umfassend
einen Träger (19, 25), welcher mit einer Wand (18, 18', 18"), einem Boden, einem Rahmen (26) des Prüfstands oder einem anderen Teil des Prüfstands beweglich verbunden ist und auf einer vorgegebenen Bahn beweglich ist;
eine Aktorik (22), welche mit dem Träger verbunden ist und mittels welcher der Träger (19, 25) auf der vorgegebenen Bahn bewegt werden kann,
zwei jeweils ein Kugelgelenk umfassende Einspannvorrichtungen (13), wobei eine erste der beiden Einspannvorrichtungen (13) an dem Träger (19, 25) befestigt ist und eine zweite der beiden Einspannvorrichtungen (13) in einer Achse (10) mit der ersten der beiden Einspannvorrichtungen (13) angeordnet ist, so dass zwischen den beiden Einspannvorrichtungen (13) ein Prüfkörper (1) an Prüfkörperaußenflächen eingespannt und von den Einspannvorrichtungen (13) gehalten werden kann und eine durch Bewegen des Trägers (19, 25) durch die erste der beiden Einspannvorrichtungen (13) auf einen Prüfkörper ausgeübte Prüfkraft entlang der Achse (10) wirkt,
**dadurch gekennzeichnet, dass**
der Prüfkörper durch ein elastisches Element (23) fixiert wird,
um eine Rotation des Prüfkörpers um die Achse (10) einzuschränken.

2. Prüfstand nach Anspruch 1, wobei der Träger (19, 25) mit der Wand (18, 18', 18"), dem Boden, dem Rahmen (26) des Prüfstands oder dem anderen Teil des Prüfstands durch Rollen (24), Gleitlager, ein oder mehrere Scharniere (20) oder ein oder mehrere Gelenke beweglich verbunden ist und die vorgegebene Bahn des Trägers (19, 25) durch die Rollen (24), Gleitlager, ein oder mehreren Scharniere (20) oder ein oder mehreren Gelenke vorgegeben ist.

3. Prüfstand nach Anspruch 1 oder 2, wobei die Aktorik (22) oder mehrere Aktoriken so angeordnet ist oder sind und der Träger (25) durch Rollen (24) oder mittels Gleitlager derart beweglich ist,
dass die Bewegung des Trägers (25) auf der vorgegebenen Bahn einer Parallelverschiebung des Trägers (25) entspricht.

4. Prüfstand nach Anspruch 1 oder 2, wobei die Aktorik (22) oder mehrere Aktoriken so angeordnet ist oder sind und der Träger (19) mittels eines Scharniers (20) oder eines Gelenks derart beweglich verbunden ist, dass die Bewegung des Trägers (25) auf der vorgegebenen Bahn einer Drehbewegung um das Scharnier (20) oder um das Gelenk entspricht.

5. Prüfstand nach Anspruch 4, wobei die Aktorik (22) auf einer gleichen Seite des Trägers (19) angeordnet ist wie die erste der beiden Einspannvorrichtungen (13).

6. Prüfstand nach Anspruch 4, wobei die Aktorik (22) auf einer anderen Seite des Trägers (19) angeordnet ist als die erste der beiden Einspannvorrichtungen (13).

7. Prüfstand nach einem der Ansprüche 4 bis 6, wobei zur Erzeugung einer Hebelwirkung das Scharnier (20) an einem ersten Ende des Trägers (19) angeordnet ist und die Aktorik (22) in der Nähe eines dem ersten Ende abgewandten zweiten Endes des Trägers angeordnet ist.

8. Prüfstand nach einem der vorherigen Ansprüche, wobei der Träger (19) als Balken ausgebildet ist.

9. Prüfstand nach einem der vorherigen Ansprüche, wobei die Aktorik (22) oder die Aktoriken als pneumatischer, hydraulischer oder elektrischer Zylinder ausgebildet ist/sind.

10. Prüfstand nach einem der vorherigen Ansprüche, wobei das elastische Element (23) als Feder ausgebildet ist.

11. Prüfstand nach einem der vorhergehenden Ansprüche, wobei zwischen den Einspannvorrichtungen (13) und den Prüfkörperaußenflächen Lasteinleitungsrahmen (21) bereitgestellt werden.

12. Prüfstand gemäß einem der vorhergehenden Ansprüche, wobei der Prüfstand ein digitales Bildkorrelationssystem aufweist, welches eingerichtet ist zur Überwachung einer Verformung des Prüfkörpers (1), wobei das digitale Bildkorrelationssystem eingerichtet ist, die Rotation des Prüfkörpers (1) um die Achse (10) zu erfassen und bei einer Berechnung der Verformung zu berücksichtigen.

13. Prüfstand gemäß einem der vorhergehenden Ansprüche, wobei das elastische Element (23) den Prüfkörper mit einem Rahmen des Prüfstandes oder mit einer Wand verbindet.

14. Prüfstand gemäß einem der vorhergehenden Ansprüche, wobei das elastische Element (23) horizontal angeordnet ist.

## Claims

1. A test stand, comprising:
a carrier (19, 25) which is movably connected to a wall (18, 18', 18"), to a ground, to a frame (26) of the test stand or to another part of the test stand and is movable on a predefined path;
an actuator (22) which is connected to the carrier and by way of which the carrier (19, 25) can be moved on the predefined path,
two clamping devices (13) which each comprise a ball joint, wherein a first of the two clamping devices (13) is fastened to the carrier (19, 25) and a second of the two clamping devices (13) is arranged in an axis (10) with the first of the two clamping devices (13), so that between the two clamping devices (13) a test body (1) can be clamped at test body outer surfaces and be held by the clamping devices (13) and a test force which is exerted onto a test body by the first of the two clamping devices (13) by way of moving the carrier (19, 25) acts along the axis (10),
**characterized in that**
the test body is fixed by an elastic element (23) in order to limit a rotation of the test body about the axis (10).

2. A test stand according to claim 1, wherein the carrier (19, 25) is movably connected to the wall (18, 18', 18"), to the ground, to the frame (26) of the test stand or to the other part of the test stand by way of rollers (24), plain bearings, one or more hinges (20) or one or more joints and the predefined path of the carrier (19, 25) is set by the rollers (24), plain bearings, one or more hinges (20) or one or more joints.

3. A test stand according to claim 1 to 2, wherein the actuator (22) or several actuators is or are arranged in such a manner and the carrier (25) is movable by way of rollers (24) or by way of plain bearings in such a manner, that the movement of the carrier (25) on the predefined path corresponds to a parallel displacement of the carrier (25).

4. A test stand according to claim 1 to 2, wherein the actuator (22) or several actuators is or are arranged in such a manner and the carrier (19) is movably connected by way of a hinge (20) or a joint in such a manner, that the movement of the carrier (25) on the predefined path corresponds to a rotation movement about the hinge (20) or about the joint.

5. A test stand according to claim 4, wherein the actuator (22) is arranged on the same side of the carrier (19) as the first of the two clamping devices (13).

6. A test stand according to claim 4, wherein the actuator (22) is arranged on a different side of the carrier (19) than the first of the two clamping devices (13).

7. A test stand according to one of the claims 4 to 6, wherein, for generating a leverage effect, the hinge (20) is arranged at a first end of the carrier (19) and the actuator (22) is arranged in the proximity of a second end of the carrier which is away from the first end.

8. A test stand according to one of the preceding claims, wherein the carrier (19) is designed as a beam.

9. A test stand according to one of the preceding claims, wherein actuator (22) or the actuators is/are designed as pneumatic, hydraulic or electrical cylinders.

10. A test stand according to one of the preceding claims, wherein the elastic element (23) is designed as a spring.

11. A test stand according to one of the preceding claims, wherein load introduction frames (21) are provided between the clamping devices (13) and the test body outer surfaces.

12. A test stand according to one of the preceding claims, wherein the test stand comprises a digital image correlation system which is configured for monitoring a deformation of the test body (1), wherein the digital image correlation system is configured to detect the rotation of the test body (1) about the axis (10) and to take it into account on computing the deformation.

13. A test stand according to any one of the preceding claims, wherein the elastic member (23) connects the test body to a frame of the test stand or to a wall.

14. A test stand according to any one of the preceding claims, wherein the elastic member (23) is arranged horizontally.

## Revendications

1. Banc d'essai, comprenant
un support (19, 25) qui est relié de manière mobile à une paroi (18, 18', 18"), un fond, un cadre (26) du banc d'essai ou une autre partie du banc d'essai et qui est mobile sur une piste prédéterminée ;
un actionneur (22) qui est relié au support et au moyen duquel le support (19, 25) peut être déplacé sur la piste prédéterminée,
deux dispositifs de serrage (13) comprenant chacun une articulation à rotule, dans lequel un premier des deux dispositifs de serrage (13) est fixé au support (19, 25) et un second des deux dispositifs de serrage (13) est agencé dans un axe (10) avec le premier des deux dispositifs de serrage (13) de sorte qu'entre les deux dispositifs de serrage (13), un corps de test (1) peut être serré sur des surfaces extérieures de corps de test et peut être maintenu par les dispositifs de serrage (13) et une force de test exercée sur un corps de test par un déplacement du support (19, 25) via le premier des deux dispositifs de serrage (13) agit le long de l'axe (10),
**caractérisé en ce que**
le corps de test est fixé par un élément élastique (23) pour limiter une rotation du corps de test autour de l'axe (10).

2. Banc d'essai selon la revendication 1, dans lequel le support (19, 25) est relié de manière mobile à la paroi (18, 18', 18"), au fond, au cadre (26) du banc d'essai ou à l'autre partie du banc d'essai par des rouleaux (24), des paliers lisses, une ou plusieurs charnières (20) ou une ou plusieurs articulations et la piste prédéterminée du support (19, 25) est définie par les rouleaux (24), les paliers lisses, une ou plusieurs charnières (20) ou une ou plusieurs articulations.

3. Banc d'essai selon la revendication 1 ou 2, dans lequel l'actionneur (22) ou plusieurs actionneurs est ou sont agencés et le support (25) peut être déplacé par des rouleaux (24) ou au moyen de paliers lisses de telle sorte que le déplacement du support (25) sur la piste prédéterminée correspond à un déplacement parallèle du support (25).

4. Banc d'essai selon la revendication 1 ou 2, dans lequel l'actionneur (22) ou plusieurs actionneurs est ou sont agencés et le support (19) est relié de manière mobile au moyen d'une charnière (20) ou d'une articulation de sorte que le déplacement du support (25) sur la piste prédéterminée correspond à un déplacement de rotation autour de la charnière (20) ou autour de l'articulation.

5. Banc d'essai selon la revendication 4, dans lequel l'actionneur (22) est agencé sur un même côté du support (19) que le premier des deux dispositifs de serrage (13).

6. Banc d'essai selon la revendication 4, dans lequel l'actionneur (22) est agencé sur un autre côté du support (19) par rapport au premier des deux dispositifs de serrage (13).

7. Banc d'essai selon l'une quelconque des revendications 4 à 6, dans lequel afin de générer un effet de levier, la charnière (20) est agencée au niveau d'une première extrémité du support (19) et l'actionneur (22) est agencé à proximité d'une seconde extrémité du support à l'opposé de la première extrémité.

8. Banc d'essai selon l'une quelconque des revendications précédentes, dans lequel le support (19) est réalisé sous la forme d'une poutre.

9. Banc d'essai selon l'une quelconque des revendications précédentes, dans lequel l'actionneur (22) ou les actionneurs est/sont réalisé(s) sous la forme d'un vérin pneumatique, hydraulique ou électrique.

10. Banc d'essai selon l'une quelconque des revendications précédentes, dans lequel l'élément élastique (23) est réalisé sous la forme d'un ressort.

11. Banc d'essai selon l'une quelconque des revendications précédentes, dans lequel des cadres d'introduction de charge (21) sont prévus entre les dispositifs de serrage (13) et les surfaces extérieures de corps de test.

12. Banc d'essai selon l'une quelconque des revendications précédentes, dans lequel le banc d'essai présente un système de corrélation d'images numérique qui est configuré pour surveiller une déformation du corps de test (1), dans lequel le système de corrélation d'images numérique est configuré pour détecter la rotation du corps de test (1) autour de l'axe (10) et pour la prendre en compte lors du calcul de la déformation.

13. Banc d'essai selon l'une quelconque des revendications précédentes, dans lequel l'élément élastique (23) relie le corps de test à un cadre du banc d'essai ou à une paroi.

14. Banc d'essai selon l'une quelconque des revendications précédentes, dans lequel l'élément élastique (23) est agencé horizontalement.
